# EUROPEAN PATENT SPECIFICATION

(11) **EP 2 127 830 B1**
(45) Date of publication and mention of the grant of the patent: **24.09.2014**
(21) Application number: 09160529.5
(22) Date of filing: 18.05.2009
(51) Int. Cl.: B27C 1/10, B25F 5/00

(54) **Planer**
Hobel
Raboteuse

(30) Priority: 28.05.2008 GB 0809621
(43) Date of publication of application: 02.12.2009
(73) Proprietor: Black & Decker, Inc., Newark, DE 19711 (US)
(72) Inventor: Rosenau, Isabell, 63303 Dreieich (DE); Bell, Ian S., Sunninghill, Berkshire SL5 0AB (GB)
(74) Representative: Bell, Ian Stephen

(56) References cited:
- CH-A- 472 948
- DE-A1- 3 600 882
- US-A- 2 538 044
- US-A- 3 126 929
- US-A- 4 555 850
- US-S1- D 607 291

## Description

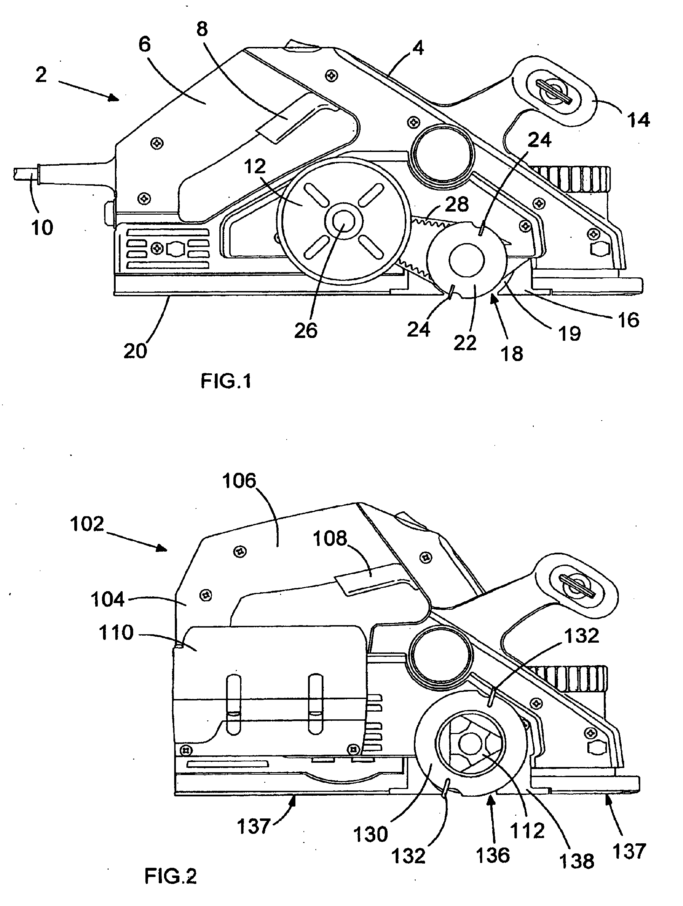

A known type of hand held planer for removing the surface of a workpiece such as a wooden door is shown in Figure 1. The planer 2 has a housing 4 having a rear handle 6, provided with a trigger switch 8 for supplying electrical power via a power supply cable 10 to an electric motor 12, and a front handle 14. A shoe 16 having a part-cylindrical recess 19 is mounted to and flush with the bottom 20 of the housing 4. A planer cylinder 22 having a pair of diametrically opposed blades 24 is rotatably mounted in a recess 19 so that the surface of the planer cylinder 22 protrudes slightly from the recess 19 through an aperture 18 in the underside of the shoe 16 in order to engage a workpiece (not shown) when the planer 2 rests on the workpiece. The motor 12 has an output shaft 26 which is connected via a drive belt 28 to the planer cylinder 22 such that the planer cylinder 22 is driven at lower rotational speed and higher torque than the output shaft 26 of the motor 12. When the planer cylinder 22 is driven by the motor 12 via the belt 28, the blades 22 contact and remove material from the surface of the work piece.

GB2299051and EP1428620 disclose such a hand held planer.

DE3600882 (disclosing the preamble of claim 1), EP0878280, WO93/15885, US4693648 and US4555850 disclose planers having a rear handle comprising an elongate shaft attached at one end to the rear of the housing. However, these patents disclose planers having a separate front handle mounted directly onto the front of the housing.

The present invention seeks to provide an improved design for the rear and front handles of a hand held planer.

Accordingly, there is provided a hand held electrically powered planer according to claim 1.

The shaft can be resiliently mounted on the housing to allow the grip and the front handle to move against a biasing force towards or away from the housing. By constructing it in this manner, vibration damping can be provided for both of the front and rear handles.

Alternatively, at least a part of the shaft can be resilient to allow the grip and/or front handle to move against a biasing force towards of away from the housing. Dependant on which part of the shaft is resistant, vibration dampening can be provided for just the front handle or both handles.

Two preferred embodiments of the invention will now be described, by way of example only and not in any limitative sense, with reference to the accompanying drawings in which:-
Figure 1 is a cross sectional elevational view of a known hand held power planer;
Figure 2 is a cross section elevation view of another design of battery powered planer;
Figure 3 shows a perspective view of a planer according to the first embodiment of the present invention;
Figure 4 shows a top view of the planer according to the first embodiment of the present invention;
Figure 5 shows an underside view of the planer according to the first embodiment of the present invention;
Figure 6 shows a side view of the planer according to the first embodiment of the present invention; and
Figure 7 shows a side view of the planer according to the second embodiment of the present invention.

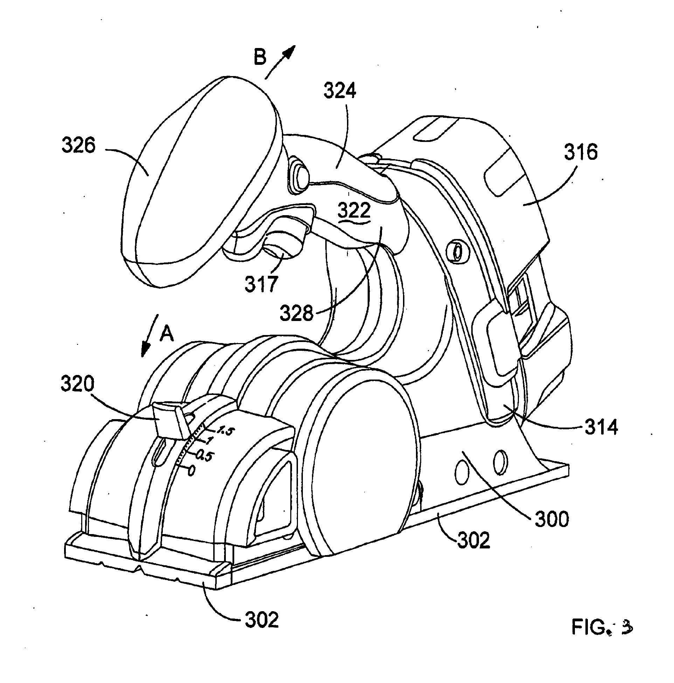

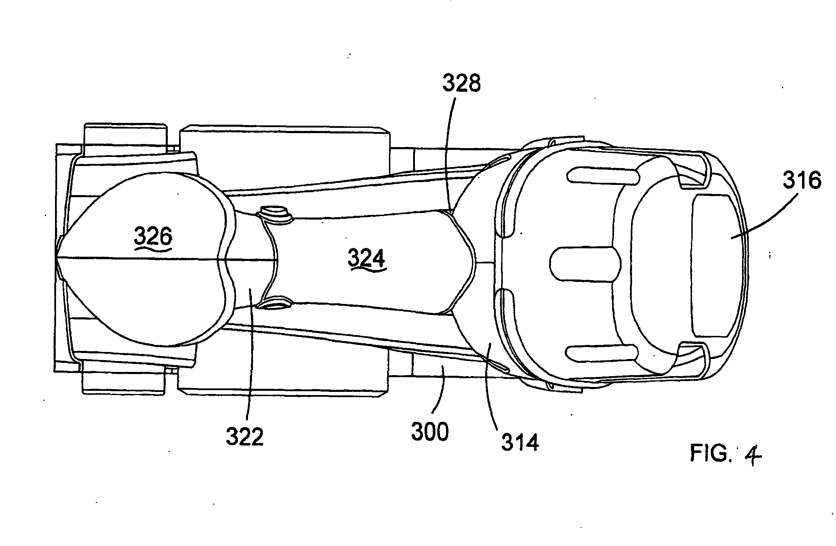

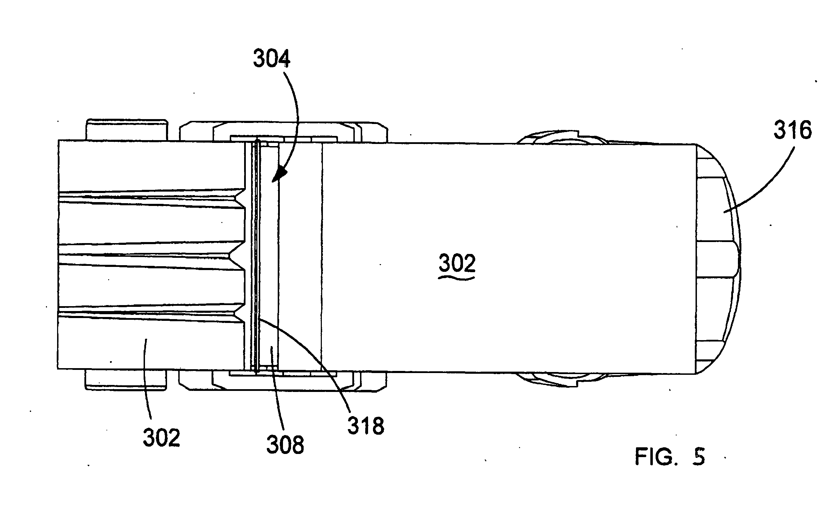

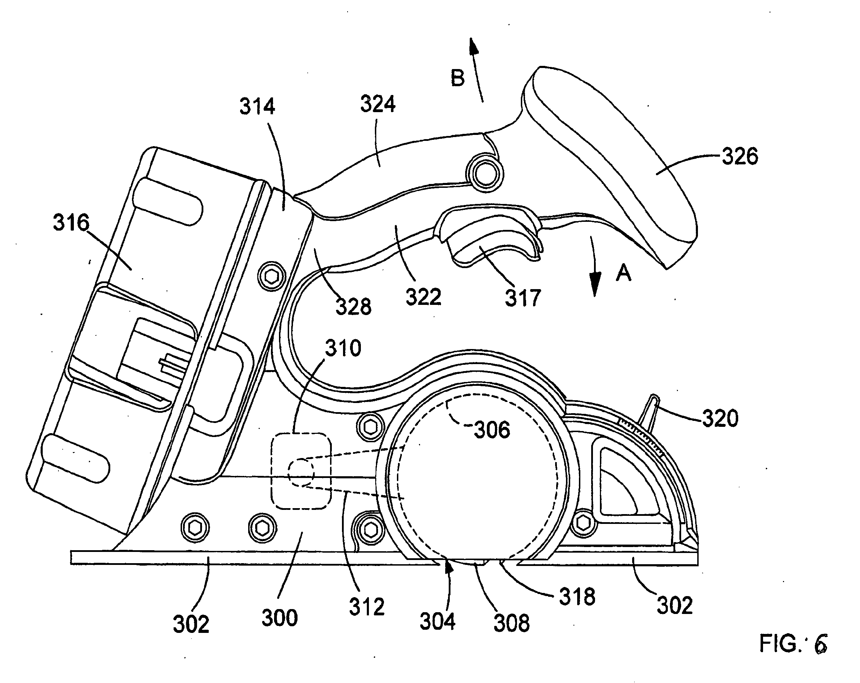

Referring to Figures 3 to 6, the hand held electrically power planer comprises a housing 300. Attached to the underside of the housing 300 is a work piece engaging shoe 302 through which is formed an aperture 304. The shoe 302 rests against a work piece when the planer is in use. Rotatably mounted within the housing 300 is a cutting drum (indicated by dashed lines 306 in Figure 6). A part 308 of drum 306 protrudes through the aperture 304 in the shoe 302. A cutting blade 318 is rigidly attached to the drum 306. An electric motor (indicated by dashed lines 310 in Figure 16) is mounted within the housing 300. The motor 310 rotatingly drives the cutting drum 306 via a rubber belt (shown by dashed lines 312 in Figure 6) when activated in a similar manner to the planer described previously with reference to Figure 1. The motor is powered by a battery pack 316 releasably mounted on to the rear 314 of the housing 300. The battery 316 is in electrical contact with the motor 310 via a trigger switch 317. Depression of the trigger switch 317 provides an electrical connection between the battery 316 and the motor 310 and thereby activates the motor 310 which in turn rotatingly drives the cutting drum 306 in well known manner. As the drum 306 rotates, the cutting blade 318 repetitively passes through the aperture 304 to cut the work piece. A knob 320 is slideably mounted on the front of the housing 300. Movement of the knob 320 results in the adjustment of the height of the front of the shoe 302, forward of the aperture 304, relative to the housing.

The rear handle comprises an elongate shaft 322 which is attached at one end to the rear part 314 of the housing 300. The shaft 322 extends in a forward direction, along the length of the housing 300, over the top of the housing 300 as best seen in Figure 6. A grip 324 is mounted on the shaft 322 by which an operator grasps the shaft 322. The grip 324 is ideally moulded to the shape of the hand of an operator for comfort. Alternatively, the grip could be integrally formed with the shaft 322. The front handle 326 is integrally formed on the free end shaft 322. The trigger switch 317 is also mounted on the underside of the shaft 322.

The shaft 322 is constructed so that it can flex towards the housing 300 (Arrow A) or away from the housing (Arrow B) when pressure is applied to the shaft 322. The flexibility is generated by making the part 328 of the shaft 322 that connects to the rear 314 of the housing 300 resilient, allowing the shaft 322 to bend at this point 328. It will be appreciated that the whole of the shaft could be made in a resilient manner to allow bending any where along its length.

In use, the operator would grasp the shaft 322 via the grip 324 with one hand and the front handle 326 with the other hand in order to use the planer. The operation of the planer is the same as that of a conventional planer, the operator squeezing the trigger switch 317 to switch it on. When the operator presses the shoe 302 against a work piece, the pressure on the shaft 322 will cause it to flex moving the grip 324 and the front handle 326 towards the housing 300 slightly. As the planer cuts the work piece, the cutting action of the blade 318 generates vibration in the housing 300. However, due to the shaft 322 being connect to the housing 300 with a resilient part 328, the amount of vibration transmitted to the shaft 322 from the housing is reduced, the resilient part 328 acting as a vibration dampener.

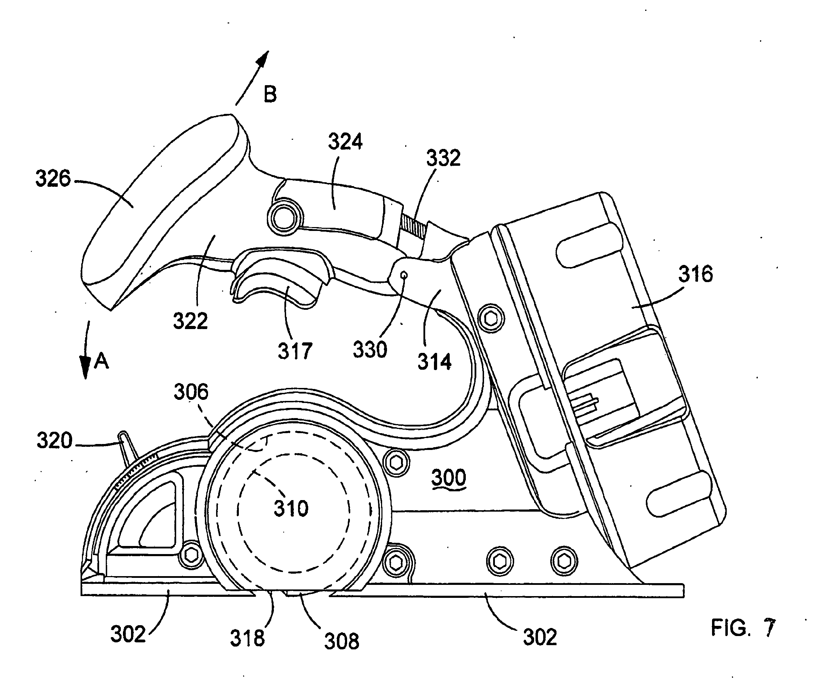

A second embodiment of the invention will now be described with reference to Figure 7. Where to same features are present in the second embodiment which were present in the first, the same reference numbers have been used. There are two differences between the first and second embodiments.

Firstly, the electric motor 310 and the cutting drum 306 have been integrated in the same manner as that in the planer described previously with reference to Figure 2.

Secondly, the shaft 322 in the second embodiment of the rear handle is rigid along the whole of its length, However, the shaft 322 is attached to the rear 314 of the housing 300 via a pivot 330. This enables the shaft 322, grip 324 and front handle 326 to pivot towards or away from the housing 300. A helical spring 332 is connected between the shaft 322 and rear 314 of the housing and resiliently biases the shaft to a predetermined position as shown in Figure 7. The spring 332 provides a biasing force against the movement of the shaft 322 towards or away from the housing 300. The spring also acts as a vibration dampener, reducing the amount of vibration transferred from the housing 300 to the shaft 322.

## Claims

1. A hand held electrically powered planer comprising:
a housing 300;
an electric motor 310 mounted within the housing 300;
a work piece engaging shoe 302 mounted on the underside of the housing 300 having an aperture 304 formed through it;
a cutting drum 306 rotatably mounted within the housing 300, which is capable of being rotatably driven by the electric motor 310 when the electric motor 310 is activated, wherein a part 308 of the cutting drum 306 protrudes through the aperture 304 to engage with a work piece;
a cutting blade mounted on the cutting drum;
a rear handle mounted on the housing 300 wherein;
the rear handle comprises an elongate shaft 322 attached at one end only to the rear of the housing 300 and which extends forward in a lengthwise direction over a portion of the housing 300 towards the front end of the housing; and
a grip 324 mounted or formed on the elongate shaft 322, **characterised in that** there is provided a forward handle 326 which is mounted on the free end of the shaft 322 forward of the grip 324.

2. A hand held electrically powered planer as claimed in claim 1 wherein the forward handle 326 is integrally formed on the free end of the shaft 322.

3. A hand held electrically powered planer as claimed in any one of the previous claims wherein the shaft is resiliently mounted on the housing to allow the grip and the front handle to move against a biasing force towards or away from the housing.

4. A hand held electrically powered planer as claimed in claim 3 wherein the shaft is mounted on the housing using a pivot 330 and there is further provided a biasing means 332 connected between the shaft 322 and the housing 300 to bias the shaft to a predetermined position whilst allow the grip and/or front handle to move against the biasing force of the biasing means 322 towards or away from the housing.

5. A hand held electrically powered planer as claimed in either of claims 1 or 2 wherein at least a part 328 of the shaft is resilient to allow the grip and/or front handle to move against a biasing force towards or away from the housing.

6. A hand held electrically powered planer as claimed in any one of the previous claims wherein there is further provided a battery 316 mounted on the housing to power the motor.

7. A hand held electrically powered planer as claimed in any one of the previous claims wherein there is provided a trigger switch 317 mounted on shaft 322 which can be used to activate the electric motor.

8. A hand held electrically powered planer as claimed in any one of the previous claims wherein the electric motor is integral with the cutting drum.

## Patentansprüche

1. Tragbare, elektrisch betriebene Hobelmaschine, umfassend:
ein Gehäuse 300;
einen Elektromotor 310, der im Gehäuse 300 montiert ist;
einen werkstückgreifenden Schuh 302, der auf der Unterseite des Gehäuses 300 befestigt ist, welcher eine Öffnung 304 hat, die durch dasselbe führt;
eine Schneidwalze 306, die drehbar innerhalb des Gehäuses 300 befestigt ist und die drehbar vom Elektromotor 310 angetrieben werden kann, wenn der Elektromotor 310 aktiviert wird, wobei ein Teil 308 der Schneidwalze 306 durch die Öffnung 304 vorragt, um ein Werkstück zu belegen;
ein Messer, das auf der Schneidwalze montiert ist;
ein hinterer Handgriff, der auf dem Gehäuse 300 montiert ist, wobei
der hintere Handgriff einen länglichen Schaft 322 umfasst, der an einem Ende nur an der Rückseite des Gehäuses 300 befestigt ist und der sich nach vorn in Längsrichtung über einen Teil des Gehäuses 300 in Richtung auf das Vorderende des Gehäuses erstreckt; und
einen Griff 324, der am länglichen Schaft 322 befestigt oder angeformt ist, **dadurch gekennzeichnet, dass** ein vorderer Handgriff 326 vorgesehen ist, der am freien Ende des Schaftes 322 vor dem Griff 324 befestigt ist.

2. Tragbare, elektrisch betriebene Hobelmaschine nach Anspruch 1, wobei der vordere Handgriff 326 an das freie Ende des Schafts 322 integral angeformt ist.

3. Tragbare, elektrisch betriebene Hobelmaschine nach einem der vorherigen Ansprüche, wobei der Schaft elastisch am Gehäuse befestigt ist, so dass der Griff und der vordere Handgriff sich gegen eine Vorspannkraft zum Gehäuse hin oder von demselben weg bewegen können.

4. Tragbare, elektrisch betriebene Hobelmaschine nach Anspruch 3, wobei der Schaft auf dem Gehäuse unter Verwendung eines Zapfens 330 befestigt ist und ein Vorspannmittel 332 ferner vorgesehen wird, das zwischen dem Schaft 322 und dem Gehäuse 300 angeschlossen ist, um den Schaft in einer vorgegebenen Position vorzuspannen, während der Griff und/oder der vordere Handgriff sich gegen die Vorspannkraft 322 zum Gehäuse hin oder von demselben wegbewegen können.

5. Tragbare, elektrisch betriebene Hobelmaschine nach einem der Ansprüche 1 und 2, wobei zumindest ein Teil 328 des Schafts elastisch ist und ermöglicht, dass der Griff und/oder der vordere Handgriff sich gegen eine Vorspannkraft zum Gehäuse hin oder von demselben wegbewegen können.

6. Tragbare, elektrisch betriebene Hobelmaschine nach einem der vorherigen Ansprüche, wobei ferner eine Batterie 316, die am Gehäuse befestigt ist, zum An-trieb des Motors vorgesehen ist.

7. Tragbare, elektrisch betriebene Hobelmaschine nach einem der vorherigen Ansprüche, wobei ein Auslöseschalter 317 vorgesehen ist, der auf dem Schaft 322 befestigt ist und zum Aktivieren des Elektromotors verwendet werden kann.

8. Tragbare, elektrisch betriebene Hobelmaschine nach einem der vorherigen Ansprüche, wobei der Elektromotor in die Schneidwalze integriert ist.

## Revendications

1. Raboteuse électrique portative, comprenant :
un boîtier 300 ;
un moteur électrique 310 monté dans le boîtier 300 ;
un patin 302 venant en contact avec la pièce, monté sur la partie inférieure du boîtier 300 et ayant une ouverture 304 qui le traverse ;
un tambour de coupe 306 monté à rotation dans le boîtier 300, qui est à même d'être entraîné en rotation par le moteur électrique 310 lorsque le moteur électrique 310 est activé, dans laquelle une partie 308 du tambour de coupe 306 fait saillie à travers l'ouverture 304 pour s'engager sur une pièce ;
une lame de coupe montée sur le tambour de coupe ;
une poignée arrière montée sur le boîtier 300, dans laquelle :
la poignée arrière comprend un arbre allongé 322 fixé, à une extrémité seulement, à l'arrière du boîtier 300 et qui s'étend en avant dans le sens de la longueur sur une partie du boîtier 300 vers l'extrémité avant du boîtier ; et
une prise 324 montée ou formée sur l'arbre allongé 322, **caractérisée en ce qu'**il est prévu une poignée avant 326 qui est montée sur l'extrémité libre de l'arbre 322 en avant de la prise 324.

2. Raboteuse électrique portative selon la revendication 1, dans laquelle la poignée avant 326 est formée d'un seul tenant sur l'extrémité libre de l'arbre 322.

3. Raboteuse électrique portative selon l'une quelconque des revendications précédentes, dans laquelle l'arbre est monté de manière élastique sur le boîtier pour permettre à la prise et à la poignée avant de se déplacer à l'encontre d'une force de sollicitation vers le boîtier ou en sens inverse.

4. Raboteuse électrique portative selon la revendication 3, dans laquelle l'arbre est monté sur le boîtier en utilisant un pivot 330 et il est en outre prévu un moyen de sollicitation 332 raccordé entre l'arbre 322 et le boîtier 300 pour presser l'arbre dans une position prédéterminée tout en permettant à la prise et/ou à la poignée avant de se déplacer à l'encontre de la force de sollicitation du moyen de sollicitation 322 vers le boîtier ou en sens inverse.

5. Raboteuse électrique portative selon l'une quelconque des revendications 1 ou 2, dans laquelle au moins une partie 328 de l'arbre est élastique pour permettre à la prise et/ou à la poignée avant de se déplacer à l'encontre d'une force de sollicitation vers le boîtier ou en sens inverse.

6. Raboteuse électrique portative selon l'une quelconque des revendications précédentes, dans laquelle il est encore prévu une pile 316 montée sur le boîtier pour alimenter le moteur.

7. Raboteuse électrique portative selon l'une quelconque des revendications précédentes, dans laquelle il est prévu un commutateur de déclenchement 317 monté sur l'arbre 322 qui peut être utilisé pour activer le moteur électrique.

8. Raboteuse électrique portative selon l'une quelconque des revendications précédentes, dans laquelle le moteur électrique fait partie intégrante du tambour de coupe.
